# EUROPEAN PATENT APPLICATION

(11) **EP 3 310 118 A1**
(43) Date of publication of application: **18.04.2018**
(21) Application number: 16806520.9
(22) Date of filing: 19.02.2016
(51) Int. Cl.: H04W 76/02, G08G 1/00

(54) **INTERNET OF VEHICLE ARCHITECTURE AND SERVICE IMPLEMENTATION METHOD AND DEVICE THEREIN**

(30) Priority: 12.06.2015 CN 201510325636
(71) Applicant: ZTE Corporation, Shenzhen, Guangdong 518057 (CN)
(72) Inventor: XU, Hui, Shenzhen Guangdong 518057 (CN); MA, Zijiang, Shenzhen Guangdong 518057 (CN); XU, Ling, Shenzhen Guangdong 518057 (CN); XIE, Yutang, Shenzhen Guangdong 518057 (CN)
(74) Representative: Regimbeau
(86) International application number: PCT/CN2016/074086
(87) International publication number: WO 2016/197622

(57) **Abstract**

Provided are a Vehicle to Everything, V2X, architecture and a service implementation method and apparatus therein. The V2X architecture at least comprises: an on-board unit, a road side unit, a V2X function entity and a V2X application server. The method comprises: the on-board unit sends request information to the V2X application server via a network application layer signaling or the V2X function entity, wherein the request information is used to indicate requesting for a V2X service; the on-board unit receives from the V2X application server first indication information in response to the request information, wherein the first indication information is used to indicate whether the request information successfully requests for the V2X service; and when the first indication information indicates that the request information successfully requests for the V2X service, the on-board unit receives data of the V2X service sent by the V2X application server via the road side unit.

## Description

### TECHNICAL FIELD

The present invention relates to the field of communication, and in particular, to a Vehicle to Everything architecture and a service implementing method and apparatus therein.

### BACKGROUND

With the rapid economic and social development, motor vehicles in China grows rapidly, leading to frequent traffic accidents, which become one of the important factors influencing a public security in the country in recent years. Traffic safety has become one of the basic issues affecting social harmony and people's livelihood. It urgently needs to improve the traffic safety from aspects of technologies, policies and educations, etc.. Among them, the improvement of the vehicle safety design is important.

The technologies to improve vehicle safety are mainly divided into passive safety technologies and active safety technologies. The passive safety technologies are used to protect personnel and articles that are inside and outside the vehicles after an accident, and the active safety technologies are used to prevent and reduce vehicle accidents and avoid personal injury. The active safety technologies are the concern and developing trend of safety technologies of modern vehicle.

By using advanced wireless communication technologies and next-generation information processing technologies, a collision warning system based on communication realizes the real-time information interaction between vehicles and between the vehicles and road side infrastructures, notifies the current status (including the position, speed, acceleration, driving route of the vehicles) to others, acquires road environment information, perceives a dangerous situation of the road in collaboration, and provides various kinds of collision warning information in time to avoid the occurrence of road traffic safety accidents, so that it becomes a new idea in trying to solve the road traffic safety problems in various countries at present.

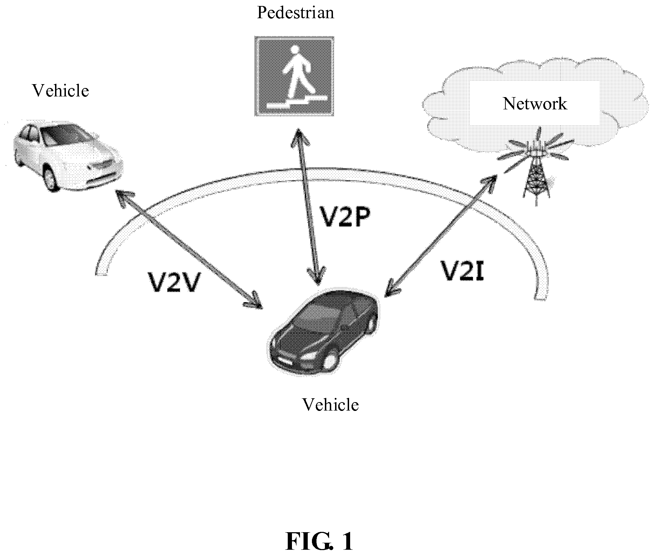

FIG. 1 is a schematic diagram of sending traffic and scheduling information to a vehicle via a network information platform in the related art. As shown in FIG. 1, Vehicle to Everything (V2X for short) refers to that: based on vehicle information provided by a sensor mounted on the vehicle, a vehicle terminal and an electronic tag, various communication technologies are used to achieve Vehicle to Vehicle (V2V for short), Vehicle to Pedestrian (V2P for short), and Vehicle to Infrastructure (V2I for short) interconnection, effectively use (such as extraction, and sharing, etc.) the information on an information network platform, and effectively control the vehicle and provide a comprehensive service.

In recent years, with the development of new mobile communication technologies, a Long Term Evolution (LTE) technology is used in study to solve the V2X communication application in the world. A Road Side Unit (RSU for shot) can receive vehicle requests, ensure vehicles to access the Internet, and have a gateway function. In addition, it also has data computing, storage and forwarding functions.

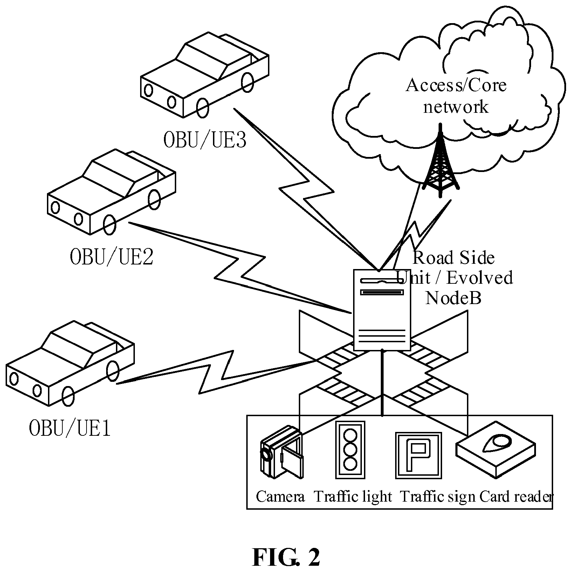

FIG. 2 is a schematic diagram of the architecture of the V2X in the related art. As shown in FIG. 2, a Vehicle to Road side Unit (V2R for short) may also be referred to as V2I, where the vehicle to the Road Side Unit (RSU) communication has the following characteristics:
(1) when the RSU broadcasts, broadcast information is sent only to all vehicles within a coverage of the RSU;
(2) transmission between the RSU and the vehicle is one-hop transmission, so as to avoid adverse impact caused by multi-hop, such as the low success rate of packet delivery, and low network throughput, etc.;
(3) the RSU can quickly receive and detect passing vehicles, traffic lights and some traffic information, and the information is processed, re-sorted, selected before sending to the vehicle.

The above three aspects ensure that when the vehicle passes through the RSU, the RSU establishes a connection with the vehicle, so that the vehicle can be reliably connected to the Internet in real time or download the data stored in the RSU.

The RSU has a short-range coverage (such as hundreds of meters), is cheap, easy to deploy and has a high data access speed (about 10mbps), research on the access of RSU in V2R may further consider the following factors:
1) the vehicles are moving at high speeds, usually at speeds of 60-70 m/s, the RSU covers a range of 1000 m, and communication links between the vehicle and the RSU are ideally maintained for 13s to 16s, so that some files cannot be completely uploaded/downloaded within one RSU coverage;
2) there is no unified management to deployment of the RSU, and RSU bandwidth and channel resources are limited, which leads to uneven distribution of the RSU, and in order to obtain more bandwidth and channel resources, disorder competition occurs between vehicles; for example, in an urban scenario, when there are overlapping regions among multiple RSUs, an incorrect access of the vehicle to the RSU can result in unbalancing load between the RSUs, and hence the utilization of network resources is reduced.

There is a problem that the RSU in the V2X in the related art cannot meet the current demand of the V2X service, and no effective solution is proposed by now.

### SUMMARY

A main objective of embodiments of the present invention is to provide a Vehicle to Everything (V2X) architecture and a service implementation method and apparatus therein, so as to at least solve the problem that the RSU in the related art cannot meet the current demand of a V2X service.

According to an aspect of the embodiments of the present invention, an V2X architecture is provided, including: a V2X application server (V2X AS), a core network Evolved Packet Core (EPC), a V2X-Function entity, a wireless access network Evolved Universal Terrestrial Radio Access Network (E-UTRAN), a Road Side Unit (RSU) and an On-Board Unit (OBU); where the V2X AS is configured to select, when a V2X service is sent by the V2X AS in a broadcast mode, an interface between the V2X AS and a broadcast multicast service center (BM-SC) in the EPC to send the V2X service; or, select, when the V2X service is sent by the V2X AS in a unicast mode, an interface between the V2X AS and a packet data gateway (P-GW) in the EPC to send the V2X service; a mode of sending the V2X service to the OBU by the RSU includes at least one of the broadcast mode and the unicast mode; and a mode of transmitting services between the OBUs includes at least one of the broadcast mode and the unicast mode.

Optionally, the interface between the V2X AS and the BM-SC is an interface for a user plane and a control plane;

The interface between the V2X AS and the P-GW is a user plane interface; an interface between the V2X AS and the V2X-Function is a control plane interface; an interface between the V2X-function entity and a home subscriber server (HSS) is a control plane interface; an interface between the V2X-functions is a control plane interface; and an interface between the OBUs is an interface for a user plane and a control plane, and an interface between the OBU and the RSU is an interface for a user plane and a control plane, an interface between the OBU and the V2X-Function is a control plane interface, and a structure between the OBU and the V2X AS is an application layer interface.

Optionally, the V2X AS is further configured to select to send the V2X service to the OBU via a dedicated short range communication DSRC RSU; the V2X function entity includes a home V2X function entity and a visited V2X function entity that support roaming functions, and an interface is between the home V2X function and the visited V2X function; the V2X function entity is a network logic entity; and the RSU is an evolved NodeB (eNB) supporting V2X services or a user equipment (UE) in a stationary state.

According to another aspect of the embodiments of the present invention, a service implementation method in a Vehicle to Everything (V2X) architecture is provided, where the V2X architecture at least includes: an on-board unit, a road side unit, a V2X function entity and a V2X application server, including: sending, by the on-board unit, request information to the V2X application server via a network application layer signaling or the V2X function entity, where the request information is used to indicate requesting for a V2X service; receiving, by the on-board unit, from the V2X application server first indication information in response to the request information, where the first indication information is used to indicate whether the request information successfully requests for the V2X service; and receiving, by the on-board unit when the first indication information indicates that the request information successfully requests for the V2X service, data of the V2X service sent by the V2X application server via the road side unit.

Optionally, the sending, by the on-board unit, the request information to the V2X application server via the network application layer signaling or the V2X function entity includes: sending, by the road side unit when the road side unit stores second indication information, the request information to the V2X server via the V2X function entity according to the second indication information, where the second indication information is used to indicate that the request information is sent via the V2X function entity in a situation of meeting a preset condition; and sending, by the on-board unit when there is no second indication information in the on-board unit, the request information to the V2X application server via the network application layer signaling.

Optionally, the sending, by the on-board unit, the request information to the V2X application server via the network application layer signaling or the V2X function entity includes: judging, by the on-board unit, whether the request message needs to be sent to the V2X application server via the V2X function entity; sending, by the on-board unit when a judgment result is yes, the request information to the V2X application server via the V2X function entity; and sending, by the on-board unit when the judgment result is no, the request information to the V2X application server via the network application layer signaling.

Optionally, the sending, by the on-board unit, the request information to the V2X application server via the network application layer signaling or the V2X function entity includes: sending, by the on-board unit when the on-board unit receives third indication information from a network-side device, the request information to the V2X application server via the network application layer signaling according to the third indication information, where the third indication information is used to instruct the on-board unit to send the request information to the V2X application server via the V2X function entity; and sending, by the on-board unit when the on-board unit does not receive the third indication information sent from the network-side device, the request information to the V2X application server via the network application layer signaling.

Optionally, the V2X application server is configured to provide the V2X service, where the V2X service includes traffic indication information or application information data.

Optionally, the V2X function entity is configured to provide parameter information of the V2X service, where the parameter information includes at least one of: authentication information, authorization information, charging information, safety information, identity mapping information, and identity storage information.

Optionally, the road side unit is an evolved NodeB and/or an on-board unit, where, the on-board unit is a user equipment supporting V2X services.

Optionally, the V2X application server sends the data of the V2X service through one of the following modes: a unicast mode and a broadcast mode.

According to still another aspect of the embodiments of the present invention, a service implementation method in a Vehicle to Everything (V2X) architecture is provided, where the V2X architecture at least includes: an on-board unit, a road side unit, a V2X function entity, and a V2X application server, including: receiving, by the V2X application server, request information sent by the on-board unit via a network application layer signaling or the V2X function entity, where the request information is used to indicate requesting for a V2X service; sending, by the V2X application server, to the on-board unit first indication information in response to the request information, where the first indication information is used to indicate whether the request information successfully requests for the V2X service; and sending, by the V2X application server when the first indication information indicates that the request information successfully requests for the V2X service, data of the V2X service to the on-board unit via the road side unit.

Optionally, the receiving, by the V2X application server, request information sent by the on-board unit via a network application layer signaling or the V2X function entity includes: receiving, by the V2X server when the road side unit stores second indication information, the request information that is sent by the road side unit via the V2X function entity according to the second indication information, where the second indication information is used to indicate that the request information is sent via the V2X function entity in a situation of meeting a preset condition; and receiving, by the V2X application server when there is no second indication information in the on-board unit, the request information that is sent by the on-board unit via the network application layer signaling.

Optionally, the receiving, by the V2X application server, request information sent by the on-board unit via a network application layer signaling or the V2X function entity includes: receiving, by the V2X application server when the on-board unit judges that the request message needs to be sent to the V2X application server via the V2X function entity, the request information that is sent by the on-board unit via the V2X function entity; and receiving, by the V2X application server when the on-board unit judges that the request message does not need to be sent to the V2X application server via the V2X function entity, the request information that is sent by the on-board unit via the network application layer signaling.

Optionally, the receiving, by the V2X application server, request information sent by the on-board unit via a network application layer signaling or the V2X function entity includes: receiving, by the V2X application server when the on-board unit receives third indication information from a network-side device, the request information that is sent by the on-board unit via the network application layer signaling according to the third indication information, where the third indication information is used to instruct the on-board unit to send the request information to the V2X application server via the V2X function entity; and receiving, by the V2X application server when the on-board unit does not receive the third indication information sent from the network-side device, the request information that is sent by the on-board unit via the network application layer signaling.

Optionally, the V2X application server is configured to provide the V2X service, where the V2X service includes traffic indication information or application information data.

Optionally, the V2X function entity is configured to provide parameter information of the V2X service, where the parameter information includes at least one of: authentication information, authorization information, charging information, safety information, identity mapping information, and identity storage information.

Optionally, the road side unit is an evolved NodeB and/or an on-board unit, and the on-board unit is a user equipment supporting V2X services.

Optionally, the V2X application server sends the data of the V2X service through one of: a unicast mode and a broadcast mode.

According to still another aspect of the embodiments of the present invention, a service implementation apparatus in a Vehicle to Everything (V2X) architecture is provided, the apparatus is configured on a side of an on-board unit, and including a first sending module, a first receiving module and a second sending module, where the V2X architecture includes the on-board unit, a road side unit, a V2X function entity and a V2X application server, where the first sending module is configured to send request information to the V2X application server via a network application layer signaling or the V2X function entity, where the request information is used to indicate requesting for a V2X service; the first receiving module is configured to receive from the V2X application server first indication information in response to the request information, where the first indication information is used to indicate whether the request information successfully requests for the V2X service; and the second sending module is configured to receive, when the first indication information indicates that the request information successfully requests for the V2X service, data of the V2X service sent by the V2X application server via the road side unit.

Optionally, the first sending module includes: a first sending unit, configured to send, when the on-board unit stores second indication information, the request information to the V2X server via the V2X function entity according to the second indication information, where the second indication information is used to indicate that the request information is sent via the V2X function entity in a situation of meeting a preset condition; and a second sending unit, configured to send, when there is no second indication information in the on-board unit, the request information to the V2X application server via the network application layer signaling.

Optionally, the first sending module includes: a judgment unit, configured to judge whether the request message needs to be sent to the V2X application server via the V2X function entity; a third sending unit, configured to send the request information to the V2X application server via the V2X function entity when a judgment result is yes; and a fourth sending unit, configured to send the request information to the V2X application server via the network application layer signaling when the judgment result is no.

Optionally, the first sending module includes: a fifth sending unit, configured to send, when the on-board unit receives third indication information from a network-side device, the request information to the V2X application server via the network application layer signaling according to the third indication information, where the third indication information is used to instruct the on-board unit to send the request information to the V2X application server via the V2X function entity; and a sixth sending unit, configured to send, when the on-board unit does not receive the third indication information sent from the network-side device, the request information to the V2X application server via the network application layer signaling.

According to still another aspect of the embodiments of the present invention, a service implementation apparatus in a Vehicle to Everything (V2X) architecture is provided, configured on a side of a V2X application server, and including a second receiving module, a third sending module and a fourth sending module, where the V2X architecture includes an on-board unit, a road side unit, a V2X function entity and a V2X application server, where the second receiving module is configured to receive request information sent by the on-board unit via a network application layer signaling or the V2X function entity, where the request information is used to indicate requesting for a V2X service; the third sending module is configured to send to the on-board unit first indication information in response to the request information, where the first indication information is used to indicate whether the request information successfully requests for the V2X service; and the fourth sending module is configured to send data of the V2X service to the on-board unit via the road side unit when the first indication information indicates that the request information successfully requests for the V2X service.

Optionally, the second receiving module includes: a first receiving unit, configured to receive, when the road side unit stores second indication information, the request information that is sent by the road side unit via the V2X function entity according to the second indication information, where the second indication information is used to indicate that the request information is sent via the V2X function entity in a situation of meeting a preset condition; and a second receiving unit, configured to receive, when there is no second indication information in the road side unit, the request information that is sent by the road side unit via the network application layer signaling.

Optionally, the second receiving module includes: a third receiving unit, configured to receive, when the on-board unit judges that the request message needs to be sent via the V2X function entity to the V2X application server, the request information that is sent by the on-board unit via the V2X function entity; and a fourth receiving unit, configured to receive, when the on-board unit judges that the request message does not need to be sent via the V2X function entity to the V2X application server, the request information that is sent by the on-board unit via the network application layer signaling.

Optionally, the second receiving module includes: a fifth receiving unit, configured to receive, when the on-board unit receives third indication information from a network-side device, the request information that is sent by the on-board unit via the network application layer signaling according to the third indication information, where the third indication information is used to instruct the on-board unit to send the request information to the V2X application server via the V2X function entity; and a sixth receiving unit, configured to receive, when the on-board unit does not receive the third indication information sent from the network-side device, the request information that is sent by the on-board unit via the network application layer signaling.

In this embodiment of the present invention, the OBU may send request information that used to indicate requesting for the V2X service to the V2X AS via the network application layer signaling or the V2X function entity, and when the request information successfully requests for the V2X service, the OBU receives the data of the V2X service that is sent by the V2X AS. In this way, the V2X service does not need a unified management by the RSU but the unified management can be achieved by the V2X AS in this embodiment, thereby solving the problem that the RSU in the related art cannot meet the demand of the current V2X service, and thereby improving the efficiency of resource management or service management in the V2X.

### BRIEF DESCRIPTION OF THE DRAWINGS

The drawings described herein are used to provide a further understanding of the present invention and constitute a part of the present application. The schematic embodiments and descriptions of the present invention are used to explain the present invention, and do not constitute improper limitations to the present invention. In the drawings:
FIG. 1 is a schematic diagram of sending traffic and scheduling information to a vehicle via a network information platform in the related art;
FIG. 2 is a schematic diagram of a V2X architecture in the related art;
FIG. 3 is a flow chart 1 of a service implementation method in the V2X architecture according to an embodiment of the present invention;
FIG. 4 is a flow chart 2 of a service implementation method in the V2X architecture according to an embodiment of the present invention;
FIG. 5 is a structural block diagram 1 of a service implementation apparatus in the V2X architecture according to an embodiment of the present invention;
FIG. 6 is a structural block diagram 2 of a service implementation apparatus in the V2X architecture according to an embodiment of the present invention.
FIG. 7 is a flow chart of an implementation method of the V2X architecture according to an alternative embodiment of the present invention;
FIG. 8 is a schematic diagram of a V2X function supporting roaming according to an alternative embodiment of the present invention;
FIG. 9 is a schematic diagram of the V2X architecture according to an alternative embodiment of the present invention;
FIG. 10 is a flow chart of a method according to an alternative embodiment 1 of the present invention;
FIG. 11 is a flow chart of a method according to an alternative embodiment 2 of the present invention;
FIG. 12 is a flow chart of a method according to an alternative embodiment 3 of the present invention;
FIG. 13 is a schematic diagram 1 of an architecture using a unicast carrier according to an alternative embodiment of the present invention;
FIG. 14 is a schematic diagram 2 of an architecture using a unicast carrier according to an alternative embodiment of the present invention;
FIG. 15 is a flow chart of a method according to an alternative embodiment 4 of the present invention;
FIG. 16 is a schematic diagram of an RSU using non-3GPP access according to an alternative embodiment of the present invention; and
FIG. 17 is a structural block diagram of an OBU according to an alternative embodiment of the present invention.

### DETAILED DESCRIPTION

It should be noted that, embodiments in the application and features in the embodiments may be combined with each other without conflict. The present invention will be described in detail below with reference to the accompanying drawings and embodiments.

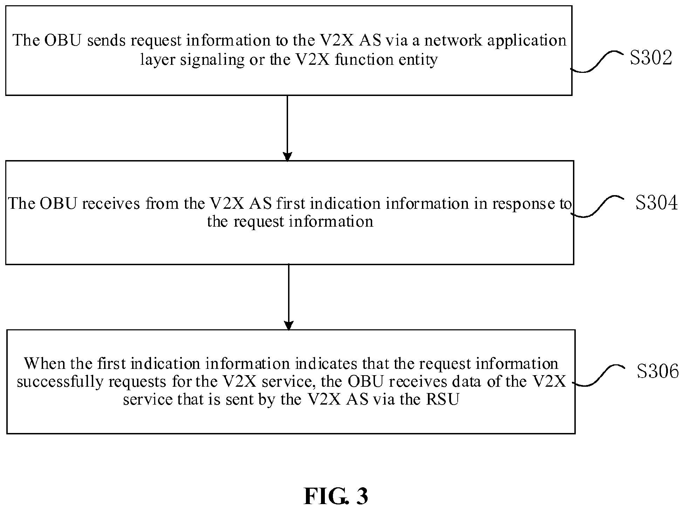

This embodiment provides a service implementation method in a Vehicle to Everything architecture. FIG. 3 is a flow chart 1 of a service implementation method in the V2X architecture according to an embodiment of the present invention. The V2X architecture includes: an On-Board Unit, a road side unit, a V2X function entity, and a V2X application server. As shown in FIG. 3, the method includes the following steps:
Step S302: The OBU sends request information to the V2X AS via a network application layer signaling or the V2X function entity, where the request information is used to indicate requesting for a V2X service;
Step S304: The OBU receives from the V2X AS first indication information in response to the request information, where the first indication information is used to indicate whether the request information successfully requests for the V2X service;
Step S306: When the first indication information indicates that the request information successfully requests for the V2X service, the OBU receives data of the V2X service that is sent by the V2X AS via the RSU.

In the above step S302 to step S306 in this embodiment, the OBU may send request information that used to indicate requesting for the V2X service to the V2X AS via the network application layer signaling or the V2X function entity, and when the request information successfully requests for the V2X service, the OBU receives the data of the V2X service that is sent by the V2X AS. In this way, the V2X service does not need a unified management by the RSU but the unified management can be achieved by the V2X AS in this embodiment, thereby solving the problem that the RSU in the related art cannot meet the demand of the current V2X service, so that the efficiency of resource management or service management in the V2X is improved.

For the above manner involved in step S302 in this embodiment in which the OBU sends the request information to the V2X AS via the network application layer signaling or the V2X function entity, the alternative implementation in this embodiment includes the following manner:
Manner 1: When the OBU stores second indication information, the RSU sends the request information to the V2X server via the V2X function entity according to the second indication information, where the second indication information is used to indicate that the request information is sent via the V2X function entity in a situation of meeting a preset condition; and when there is no second indication information in the OBU, the OBU sends the request information to the V2X AS via the network application layer signaling.
Manner 2: The OBU judges whether the request message needs to be sent to the V2X AS via the V2X function entity; when a judgment result is yes, the OBU sends the request information to the V2X AS via the V2X function entity; and when the judgment result is no, the OBU sends the request information to the V2X AS via the network application layer signaling.
Manner 3: When the OBU receives third indication information from a network-side device, the OBU sends the request information to the V2X AS via the network application layer signaling according to the third indication information, where the third indication information is used to instruct the OBU to send the request information to the V2X AS via the V2X function entity; and when the OBU does not receive the third indication information sent by the network-side device, the OBU sends the request information to the V2X AS via the network application layer signaling.

It should be noted that, the above three manners may be combined with each other according to a specific application scenario, and may also be used separately.

The V2X AS involved in this embodiment is used to provide the V2X service, where the V2X service includes: traffic indication information or application information data. In a specific application scenario, the V2X service may be: traffic indication information, electronic map downloading, entertainment information, preferential information pushing and the like, and it may also be used to provide selection of transmission path of traffic service data, storage of V2X identity, and so on.

In addition, the V2X function entity involved in this embodiment is used to provide parameter information of the V2X service, where the parameter information includes at least one of: authentication information, authorization information, charging information, security information, identity mapping information, and identity storage information. The RSU is an evolved NodeB (eNB) and/or an OBU, where the OBU is a user equipment supporting the V2X services.

Optionally, the V2X AS sends the data of the V2X service through one of the following modes: the unicast mode and the broadcast mode. In a specific application scenario, the V2X AS may send data to the OBU through the broadcast mode or the unicast mode, and the V2X AS judges whether to send data through the unicast carrier or the broadcast carrier according to network deployment conditions, and/or number/position of target OBUs, and/or policies of service provider, etc. If a Multimedia Broadcast/Multicast Service (MBMS) broadcast carrier is deployed on the network, and the number of the target OBUs is more than one and these OBUs are deployed in an adjacent region, and the service provider allows to send data through the broadcast carrier, then the V2X AS can send data through the broadcast carrier, otherwise V2X AS send data through the unicast carrier

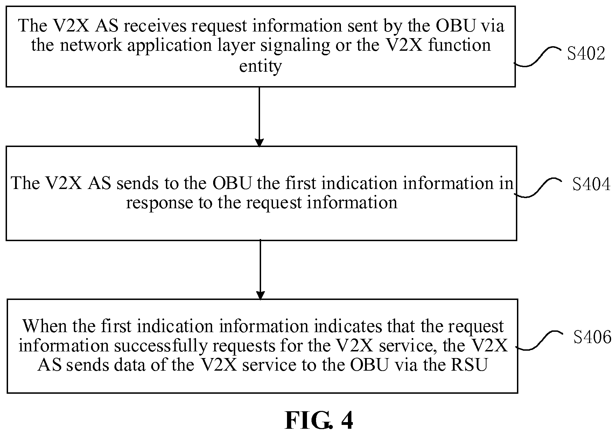

FIG. 4 is a flow chart 2 of a service implementation method in the V2X architecture according to an embodiment of the present invention. The V2X architecture includes a RSU, a V2X function entity, and a V2X AS. As shown in FIG. 4, the method of this embodiment includes:
Step S402: The V2X AS receives request information sent by the OBU via the network application layer signaling or the V2X function entity, where the request information is used to indicate requesting for a V2X service;
Step S404: The V2X AS sends to the OBU the first indication information in response to the request information, where the first indication information is used to indicate whether the request information successfully requests for the V2X service;
Step S406: When the first indication information indicates that the request information successfully requests for the V2X service, the V2X AS sends data of the V2X service to the OBU via the RSU.

In step S402 of this embodiment, a manner in which the V2X AS receives the request information sent by an OBU via network application layer signaling or a V2X function entity may be implemented in the following manner in an alternative implementation of this embodiment:
Manner 1: When the OBU stores second indication information, the V2X server receives the request information that is sent by the OBU via the V2X function entity according to the second indication information, where the second indication information is used to indicate that the request information is sent via the V2X function entity in a situation of meeting a preset condition; and when there is no second indication information in the OBU, the V2X AS receives the request information that is sent by the OBU via the network application layer signaling.
Manner 2: When the OBU judges that the request message needs to be sent to the V2X AS via the V2X function entity, the V2X AS receives the request information sent by the OBU via the V2X function entity; and when the OBU judges that the request message does not need to be send to the V2X AS via the V2X function entity, the V2X AS receives the request information sent by the OBU via the network application layer signaling.
Manner 3: When the OBU receives third indication information from a network-side device, the V2X AS receives the request information that is sent by the OBU via the network application layer signaling according to the third indication information, where the third indication information is used to instruct the OBU to send the request information to the V2X AS via the V2X function entity; and when the OBU does not receive the third indication information sent from the network-side device, the V2X AS receives the request information that is sent by the OBU via the network application layer signaling.

It should be noted that, the above three manners may be combined with each other according to a specific application scenario, and may also be used separately.

The V2X AS involved in this embodiment is used to provide the V2X service, where the V2X service includes: traffic indication information or application information data. In a specific application scenario, the V2X service may be: traffic indication information, electronic map downloading, entertainment information, preferential information pushing and the like, and it may also be used to provide selection of transmission path of traffic service data, storage of V2X identity, and so on.

In addition, the V2X function entity involved in this embodiment is used to provide parameter information of the V2X service, where the parameter information includes at least one of: authentication information, authorization information, charging information, security information, identity mapping information, and identity storage information. The RSU is an eNB and/or an OBU, where the OBU is a user equipment supporting the V2X services.

Optionally, the V2X AS sends the data of the V2X service through one of the following modes: the unicast mode and the broadcast mode. In a specific application scenario, the V2X AS may send data to the OBU through the broadcast mode or the unicast mode, and the V2X AS judges whether to send data through the unicast carrier or the broadcast carrier according to network deployment conditions, and/or number/position of target OBUs, and/or policies of service provider, etc. If a MBMS broadcast carrier is deployed on the network, and the number of the target OBUs is more than one and the OBUs are deployed in an adjacent region, and the service provider allows to send data through the broadcast carrier, then the V2X AS can send data through the broadcast carrier, otherwise V2X AS send data through the unicast carrier.

In this embodiment, a service implementation apparatus in the V2X architecture is further provided, where the service implementation apparatus is used for implementing the above embodiment and an alternative implementation, and an explanation that have been made will not be repeated here. As used below, the term "module" may be a combination of software and/or hardware that achieves a predetermined function. Although the service implementation apparatus described in the following embodiments is preferably implemented in software, the implementation of hardware or a combination of software and hardware is also possible and contemplated.

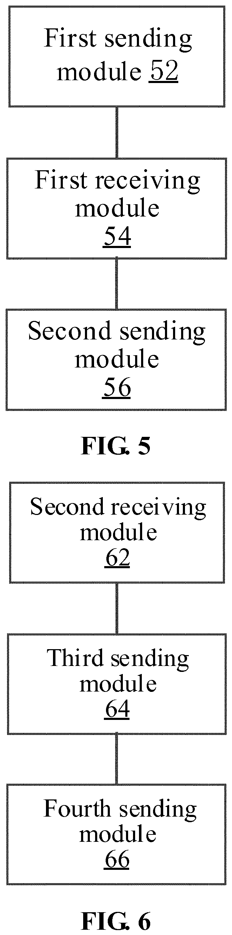

FIG. 5 is a structural block diagram 1 of a service implementation apparatus in the V2X architecture according to an embodiment of the present invention. The V2X architecture includes a RSU, a V2X function entity, and a V2X AS. The service implementation apparatus is located on a side of the RSU. As shown in FIG. 5, the service implementation apparatus further includes: a first sending module 52, configured to send request information to the V2X AS via the network application layer signaling or the V2X function entity, where the request information is used to indicate requesting for a V2X service; a first receiving module 54, coupled to the first sending module 52 and configured to receive from the V2X AS the first indication information in response to the request information, where the first indication information is used to indicate whether the request information successfully requests for the V2X service; and a second sending module 56 coupled to the first receiving module 54 and configured to receive, when the first indication information indicates that the request information successfully requests for the V2X service, data of the V2X service that is sent by the V2X AS via the RSU.

Optionally, the first sending module 52 may include: a first sending unit, configured to send, when the OBU stores the second indication information, the request information to the V2X server via the V2X function entity according to the second indication information, where the second indication information is used to indicate that the request information is sent via the V2X function entity in a situation of meeting a preset condition; and a second sending unit, configured to send, when there is no second indication information in the OBU, the request information to the V2X AS via the network application layer signaling. And/or,

the first sending module 52 includes: a judgment unit, configured to judge whether the request message needs to be sent to the V2X AS via the V2X function entity; a third sending unit, configured to send, when a judgment result is yes, the request information to the V2X AS via the V2X function entity; and a fourth sending unit, configured to send, when the judgment result is no, the request information to the V2X AS via the network application layer signaling. And/or,

the first sending module 52 includes: a fifth sending unit, configured to send, when the OBU receives the third indication information from the network-side device, the request information to the V2X AS via the network application layer signaling according to the third indication information, where the third indication information is used to instruct the OBU to send the request information to the V2X AS via the V2X function entity; and a sixth sending unit, configured to send, when the OBU does not receive the third indication information sent from the network-side device, the request information to the V2X AS via the network application layer signaling.

The V2X AS involved in this embodiment is used to provide the V2X service, where the V2X service includes: traffic indication information or application information data. In a specific application scenario, the V2X service may be: traffic indication information, electronic map downloading, entertainment information, preferential information pushing and the like, and it may also be used to provide selection of transmission path of traffic service data, storage of V2X identity, and so on.

In addition, the V2X function entity involved in this embodiment is used to provide parameter information of the V2X service, where the parameter information includes at least one of: authentication information, authorization information, charging information, security information, identity mapping information, identity storage information. The RSU is an eNB and/or an OBU, where the OBU is a user equipment supporting the V2X services.

Optionally, the V2X AS sends the data of the V2X service through one of the following modes: the unicast mode and the broadcast mode. In a specific application scenario, the V2X AS may send data to the OBU through the broadcast mode or the unicast mode, and the V2X AS judges whether to send data through the unicast carrier or the broadcast carrier according to network deployment conditions, and/or number/position of target OBUs, and/or policies of service provider, etc. If a MBMS broadcast carrier is deployed on the network, and the number of the target OBUs is more than one and the target OBUs are deployed in an adjacent region, and the service provider allows to send data through the broadcast carrier, the V2X AS can send data through the broadcast carrier, otherwise V2X AS send data through the unicast carrier.

FIG. 6 is a structural block diagram 2 of a service implementation apparatus in the V2X architecture according to an embodiment of the present invention. The V2X architecture includes a RSU, a V2X function entity, and a V2X AS, and the service implementation apparatus is located on a side of the V2X AS. As shown in FIG. 6, the service implementation apparatus includes: a second receiving module 62, configured to receive request information sent by the OBU via the network application layer signaling or the V2X function entity, where the request information is used to indicate requesting for the V2X service; a third sending module 64, coupled to the second receiving module 62 and configured to send to the OBU the first indication information in response to the request information, where the first indication information is used to indicate whether the request information successfully requests for the V2X service; a fourth sending module 66, coupled to the third sending module 54 and configured to send, when the first indication information indicates that the request information successfully requests for the V2X service, data of the V2X service to the OBU via the RSU.

The second receiving module 62 involved in this embodiment may include: a first receiving unit, configured to receive, when the OBU stores second indication information, the request information that is sent by the OBU via the V2X function entity according to the second indication information, where the second indication information is used to indicate that the request information is sent via the V2X function entity in a situation of meeting a preset condition; and a second receiving unit, configured to receive, when there is no second indication information in the RSU, the request information sent by the OBU via the network application layer signaling. And/or,
the second receiving module 62 may further include: a third receiving unit, configured to receive, when the OBU judges that request message needs to be sent via the V2X function entity to the V2X application server, the request information that is sent by the OBU via the V2X function entity; and a fourth receiving unit, configured to receive, when the OBU judges that the request message does not need to be sent via the V2X function entity to the V2X application server, the request information that is sent by the OBU via the network application layer signaling. And/or,
the second receiving module 62 may further include: a fifth receiving unit, configured to receive, when the OBU receives third indication information from a network-side device, the request information that is sent by the OBU via the network application layer signaling according to the third indication information, where, the third indication information is used to instruct the OBU to send the request information to the V2X AS via the V2X function entity; and a sixth receiving unit, configured to receive, when the OBU does not receive the third indication information sent from the network-side device, the request information that is sent by the OBU via the network application layer signaling.

The V2X AS involved in this embodiment is used to provide the V2X service, where the V2X service includes: traffic indication information or application information data. In a specific application scenario, the V2X service may be: traffic indication information, electronic map downloading, entertainment information, preferential information pushing and the like, and it may also be used to provide selection of transmission path of traffic service data, storage of V2X identity, and so on.

In addition, the V2X function entity involved in this embodiment is used to provide parameter information of the V2X service, where the parameter information includes at least one of: authentication information, authorization information, charging information, security information, identity mapping information, and identity storage information. The RSU is an eNB and/or an OBU, where the OBU is a user equipment supporting the V2X services.

Optionally, the V2X AS sends the data of the V2X service through one of the following modes: the unicast mode and the broadcast mode. In a specific application scenario, the V2X AS may send data to the OBU through the broadcast mode or the unicast mode, and the V2X AS judges whether to send data through the unicast carrier or the broadcast carrier according to network deployment conditions, and/or number/position of target OBUs, and/or policies of service provider, etc. If a MBMS broadcast carrier is deployed on the network, and the number of the target OBUs is more than one and the target OBUs are deployed in an adjacent region, and the service provider allows to send data through the broadcast carrier, the V2X AS can send data through the broadcast carrier, otherwise V2X AS send data through the unicast carrier.

This embodiment further provides a V2X architecture that includes a V2X AS, a core network Evolved Packet Core (EPC), a V2X function entity, a wireless access network Evolved Universal Terrestrial Radio Access Network (E-UTRAN), a RSU, and an OBU;
where, the V2X AS is configured to select a interface between the V2X AS and the V2X-Function and communicate with the OBU via the V2X-Function, or select the application layer interface between the V2X AS and the OBU to communicate with the OBU;
The V2X AS is configured to select, when a V2X service is sent by the V2X AS in a broadcast mode, an interface between the V2X AS and a broadcast multicast service center (BM-SC) in the EPC to send the V2X service; or, select, when the V2X service is sent by the V2X AS in a unicast mode, an interface between the V2X AS and a packet data gateway (P-GW) in the EPC to send the V2X service

The V2X AS selects broadcast mode or unicast mode to send V2X service according to the operator's policy, local configuration, and network status, etc.; where, the operator's policy refers to the transmission mode adopted by the operator, local configuration refers to the criteria for judging the transmission mode stored in the V2X AS, and the network status refers to the operation status of different carriers in the network acquired by the V2X AS, such as load and congestion, etc., so that the transmission method is judged.

A mode of sending the V2X service to the OBU by the RSU in this embodiment may be at least one of the broadcast mode and the unicast mode; and a mode of transmitting services between the OBUs includes at least one of a broadcast mode and a unicast mode;
The RSU judges whether to send an on board service to the OBU through a broadcast carrier or a unicast carrier according to the sending path of the V2X service received from the V2X AS. If the V2X AS sends the service through the BM-SC, the RSU chooses to send service through the broadcast. If the V2X AS sends the service through the P-GW, the RSU chooses to send the service through unicast. The eNB, and/or the RSU and/or the OBU judges whether to send the service between the OBUs through the broadcast or the unicast.

In addition, the V2X AS in this embodiment may also be used to send a V2X service to the OBU via a dedicated short range communication (DSRC) RSU.

The interfaces involved in the architecture of this embodiment include: an interface between the V2X AS and the BM-SC is an interface for a user plane and a control plane; an interface between the V2X AS and the P-GW is a user plane interface; an interface between the V2X AS and the V2X-Function is a control plane interface; an interface between OBUs is an interface for a user plane and a control plane, an interface between the OBU and the RSU is an interface for a user plane and a control plane, an interface between the OBU and the V2X-Function is a control plane interface, and the structure between OBU and V2X AS is an application layer interface.

The V2X function supports roaming, that is, an interface is present between the home V2X function and the visited V2X function. The V2X function entity is a network logical entity, that is, it can be used as a part of other network elements. Generally, all the OBUs can always access the corresponding V2X function entities, so as to achieve functions, such as authentication, authorization, and identity mapping, etc.

The present invention is illustrated below with reference to the alternative embodiments of the present invention;

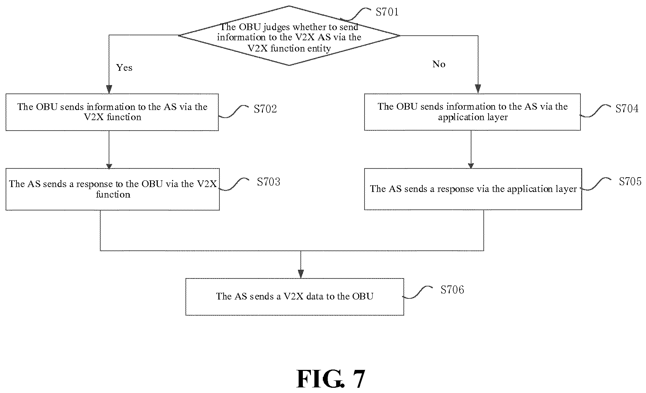

The alternative embodiment provides a method for implementing a V2X architecture. FIG. 7 is a flow chart of an implementation method of the V2X architecture according to an alternative embodiment of the present invention. As shown in FIG. 7, the method includes the following steps:
Step S701: The OBU judges whether to send information to the V2X AS via the V2X function entity, and if the result is yes, go to step S702; otherwise, go to step S704;
where, the OBU refers to a UE that has V2X functions, such as a UE that has the V2X service layer/application layer. The OBU judges whether to send information to the V2X AS via the V2X function according to a predefined rule, and/or information type, and/or a network-side device indication, where the predefined rule is a rule that is stored in the OBU and is used to indicate when to send information to the V2X AS via the V2X function. The information type refers to whether the information relates to the V2X function. The network-side device indication means that the network-side sends indication information to the OBU, and the indication information is used to indicate whether to send the information via the V2X function.

If the predefined rules indicate that information needs to sent via the V2X function, and/or the information type is related to the V2X function, and/or the network-side indicates the OBU to send indication information via the V2X function, then it is judged that the OBU send information via the V2X function; otherwise, the OBU send information to the V2X AS via the application layer signaling.

The V2X function is responsible for providing parameter information required by the V2X service, such as authentication, authorization, charging, security, identity mapping, and identity storage, etc..

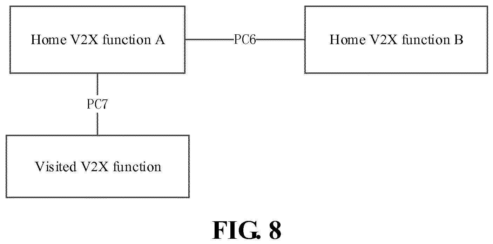

FIG. 8 is a schematic diagram of a V2X function supporting roaming according to an alternative embodiment of the present invention. As shown in FIG. 8, a PC6 is an interface between V2X functions located at different Home PLMNs (Public Land Mobile Network), and a PC7 is an interface between the V2X function of the Home PLMN and the V2X function of the Visited PLMN, where the V2X function supports OBU roaming and may use a Proximity-based services (ProSe, for short) function. The ProSe may be enhanced according to V2X service requirements.

V2X AS is an AS for V2X service. There may be multiple V2X ASs for different V2X services. The V2X services provided by the V2X AS can provide OBU/RSU with traffic indication information, electronic map downloading, entertainment information, and preferential information pushing, etc, and can also be used to select the transmission path of traffic service data, and storage of V2X identity, etc.

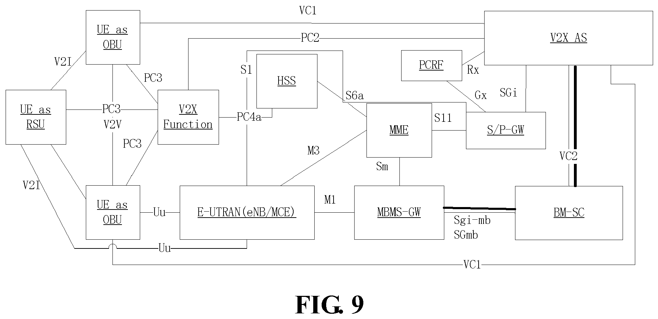

FIG. 9 is a schematic diagram of the V2X architecture according to an alternative embodiment of the present invention. As shown in FIG. 9, a stationary UE functions as the RSU. It should be noted that the eNB may also function as the RSU.
In step S702, the OBU sends information to the V2X AS via the V2X function;

where, the OBU sends information to the V2X function via a PC3 interface, and the V2X function forwards the received information to the V2X AS via a PC2 interface. The information is a signaling, for example, the OBU requests V2X AS to make a registration, or the OBU requests the V2X AS to obtain the V2X service, etc..
In step S703, the V2X AS sends a response to the OBU via the V2X function;
where, the V2X AS accepts or rejects the information sent by the OBU based on the local information and sends the success indication information or failure indication information to the OBU via the V2X function.

In step S704, the OBU sends information to the V2X AS via the application layer;
where, the OBU sends information to the V2X AS through the application layer signaling via a VC1 interface.

In step S705, the V2X AS sends a response via the application layer;
where, the V2X AS sends the response message to the OBU through the application layer signaling via the VC1 interface;
where, if the information sent by the OBU does not trigger the V2X AS to send data, the process ends.

In step S706, the V2X AS sends the V2X data to the OBU.

The V2X AS receives the request information of the OBU and sends the required data to the OBU. The V2X AS may send data to the OBU through the broadcast mode or the unicast mode, and the V2X AS judges whether to send data through the unicast carriers or the broadcast carriers according to network deployment, and/or number/position of the target OBU, and/or policies of service provider, etc. If a MBMS broadcast carrier is deployed on the network, and the number of the target OBUs is more than one and the target OBUs are deployed in an adjacent region, and the service provider allows to send data through the broadcast carrier, the V2X AS can send data through the broadcast carrier, otherwise the V2X AS sends the data through the unicast carrier.

It should be noted that: sending data by the V2X AS to the OBU is the result of the OBU sending a request, or is triggered by the information sent by the OBU, or is sent by the V2X AS actively.

It should be noted that the OBU in the alternative embodiment is equivalent to the user equipment UE with the V2X service capability, and the RSU is equivalent to the eNB or the stationary OBU.

If the RSU is a third-party RSU, such as the RSU in the DSRC, the V2X AS sends data in the following manner: 1) credit non-3GPP access trusted non-3GPP access, V2X AS->P-GW->RSU->OBU; or 2) not credit non-3GPP access untrusted non-3GPP access, V2X AS->P-GW->ePDG->RSU->OBU.

The present invention is described in detail below in combination with the specific optional embodiments of the present invention.

### Alternative Embodiment 1

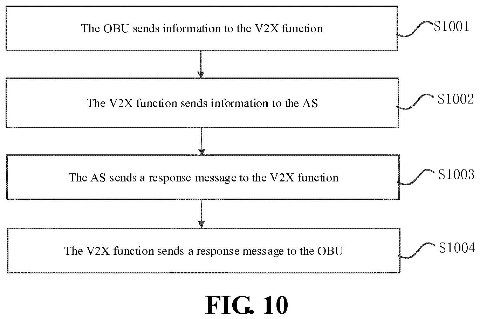

This alternative embodiment 1 is directed to a scenario in which an OBU sends information to a V2X AS via the V2X function. FIG. 10 is a flow chart of a method according to an alternative embodiment 1 of the present invention. As shown in FIG. 10, the method includes the following steps:
Step S1001: the OBU sends information to the V2X function;
   where, the OBU sends information to the V2X function via the PC3 interface.
Step S1002: the V2X function sends information to the V2X AS;
   where, the V2X function sends information to the V2X AS via the PC2 interface.
Step S1003: the V2X AS sends a response message to the V2X function;
   where, the V2X AS judges whether to accept or reject information of the OBU according to the local information; If accepted, the V2X AS sends a successful response message to the V2X function via the PC2 interface; If rejected, the V2X AS sends a failure response message to the V2X function via the PC2 interface.
Step S1004, the V2X function sends a response message to the OBU;
   where, the V2X function forwards the response message to the OBU via the PC3 interface.

### Alternative Embodiment 2:

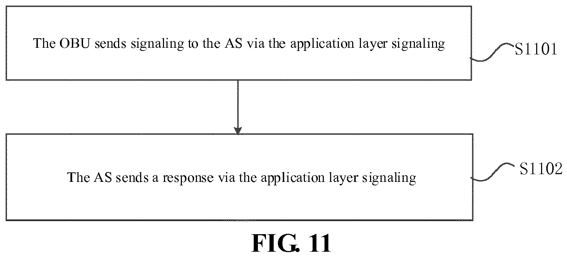

This alternative embodiment 2 is directed to a scenario in which the OBU sends information to the V2X AS via the application layer signaling. FIG. 11 is a flow chart of a method according to an alternative embodiment 2 of the present invention. As shown in FIG. 11, the method includes the following steps:
Step S1101: the OBU sends a signaling to the V2X AS via the application layer signaling;
   where, the OBU is in an RRC-connected state. If the OBU is in an RRC-Idle idle state, the OBU first establishes an RRC connection; The OBU sends the application layer signaling to the V2X AS via a 3GPP network or other transmission network carrier.
Step S1102: the V2X AS sends a response via the application layer signaling;
   where ,the V2X AS receives the application layer signaling of the OBU from the VC1 interface, and the V2X AS sends the response message to the OBU via the application layer signaling over the 3GPP network or other transport network.

### Alternative Embodiment 3:

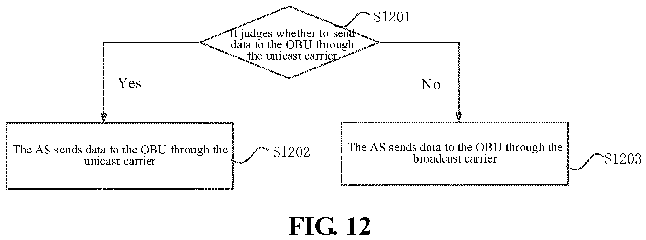

This alternative embodiment 3 is directed to a scenario in which the V2X AS sends data to the OBU. FIG. 12 is a flow chart of a method according to an alternative embodiment 3 of the present invention. As shown in FIG. 12, the method includes the following steps:
Step S1201, it judges whether to send data to the OBU via unicast. If the result is yes, go to step S1202; otherwise, go to step S1203;
where, the V2X AS receives the request information of the OBU and sends the required data to the OBU. The V2X AS may send data to the OBU through the broadcast mode or the unicast mode, and the V2X AS judges whether to send data through the unicast carriers or the broadcast carriers according to network deployment, and/or number/position of the target OBUs, and/or policies of service provider, and/or OBU capabilities, etc. If a MBMS broadcast carrier is deployed on the network, and the number of the target OBUs is more than one and the target OBUs are deployed in an adjacent region, and the service provider allows to send data through the broadcast carrier, and the OBU has MBMS reception capability, then the V2X AS can send data through the broadcast carrier, otherwise the V2X AS sends the data through the unicast carrier.

Step S1202, the V2X AS sends data to the OBU through the unicast carrier.

The V2X AS sends data to the OBU via the PDN-GW->S-GW->eNB. If there are multiple target OBUs, the V2X AS sends data to the OBU via multiple PDN connections (one connection per OBU).

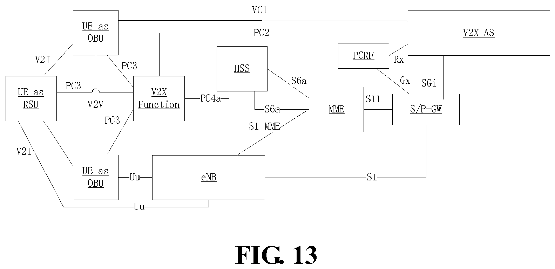

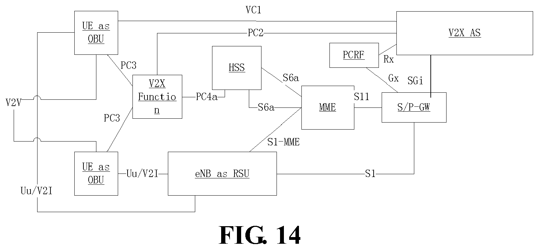

FIG. 13 is a schematic diagram 1 of an architecture using unicast carrier according to an alternative embodiment of the present invention, and FIG. 14 is a schematic diagram 2 of an architecture using unicast carrier according to an alternative embodiment of the present invention, where FIG.13 uses a stationary UE as an RSU, and Figure 14 uses the eNB as the RSU.

In step S1203, the V2X AS sends data to the OBU via a broadcast carrier;
where, the V2X AS sends data to the OBU via the BM-SC -> MBMS-GW-> eNB, and the V2X AS sends data to the BM-SC via the VC2 interface. The data is sent via the MBMS broadcast carrier.

### Alternative Embodiment 4:

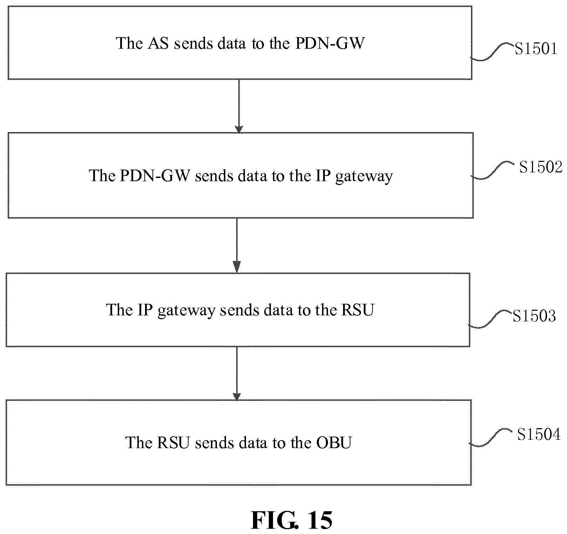

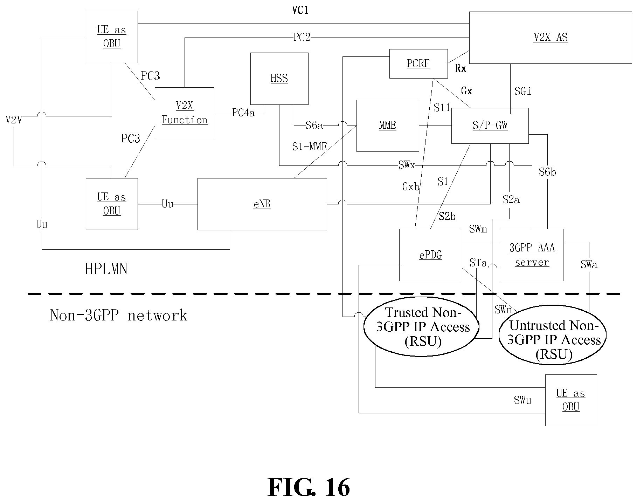

This alternative embodiment 4 is directed to a scenario in which the V2X AS sends data to the RSU. FIG. 15 is a flow chart of a method according to an alternative embodiment 4 of the present invention. As shown in FIG. 15, the method includes the following steps:
Step S1501: The V2X AS sends data to the PDN-GW;
   where, the V2X AS sends data to the PDN-GW via SGi interface.
Step S1502: The PDN-GW sends data to IP gateway.
   where, the PDN-GW sends data to the IP gateway via S2b/S6b interface. The IP gateway includes one of the ePDG and 3GPP AAA server. If the RSU is directly connected to the P-GW via S2a interface, the P-GW sends the data via the S2a interface to the RSU. FIG. 16 is a schematic diagram of the RSU using the non-3GPP access according to an alternative embodiment of the present invention. As shown in FIG. 16, an RSU is connected to the P-GW or to the P-GW via the ePDG.
In step S1503, the IP gateway sends data to the RSU;
   where, the RSU is a non-3GPP access device, such as an access point AC/AP in the DSRC.

In step S1504, the RSU sends data to the OBU.

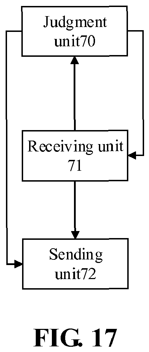

FIG. 17 is a structural block diagram of an OBU according to an alternative embodiment of the present invention. As shown in FIG. 17, the OBU includes a judgment unit 70, a receiving unit 71 and a sending unit 72. The judging unit 70 is configured to judge whether to send the information via the V2X function or the application layer signaling; the receiving unit 71 is configured to receive the response message and the V2X data; and the sending unit 72 is configured to send the information.

In another embodiment, a software is further provided for executing the solutions described in the above embodiments and alternative embodiments.

In another embodiment, a storage medium is further provided, in which the above software is stored, the storage medium includes but is not limited to: an optical disk, a floppy disk, a hard disk, a rewritable memory, and the like.

Obviously, those skilled in the art should understand that each module or each step of the present invention may be implemented by common computing devices, which may be centralized on a single computing device or distributed on a network formed by multiple computing devices, which may optionally be implemented with program code executable by a computing device, so that they may be stored in a storage device for execution by the computing device, and in some cases, the steps shown or described may be performed in a different order than here, or they can be made into individual integrated circuit modules respectively, or a plurality of modules or steps can be made into a single integrated circuit module. As such, the present invention is not limited to any specific combination of hardware and software.

The foregoing is only optional embodiments of the present invention and is not intended to limit the present invention. For those skilled in the art, the present invention may have various modifications and changes. Any modification, equivalent replacement, improvement, etc. within the spirit and principle of the present invention should be included in the protection scope of the present invention.

### Industrial practicability

In this embodiment of the present invention, the OBU may send request information used to indicate requesting for the V2X service, to the V2X AS via the network application layer signaling or the V2X function entity, and when the request information successfully requests for the V2X service, the OBU receives the data of the V2X service that is sent by the V2X AS. In this way, the V2X service does not need a unified management by the RSU but the unified management can be achieved by the V2X AS in this embodiment, thereby solving the problem that the RSU in the related art cannot meet the demand of the current V2X service, so that the efficiency of resource management or service management in the V2X can be improved.

## Claims

1. A Vehicle to Everything, V2X, architecture, comprising: a V2X application server, V2X AS, a core network Evolved Packet Core, EPC, a V2X-Function entity, a wireless access network Evolved Universal Terrestrial Radio Access Network, E-UTRAN, a Road Side Unit, RSU and an On-Board Unit, OBU; wherein
the V2X AS is configured to select, when a V2X service is sent by the V2X AS in a broadcast mode, an interface between the V2X AS and a broadcast multicast service center, BM-SC, in the EPC to send the V2X service; or, select, when the V2X service is sent by the V2X AS in a unicast mode, an interface between the V2X AS and a packet data gateway, P-GW, in the EPC to send the V2X service;
the RSU is configured to send the V2X service to the OBU in at least one of following modes: the broadcast mode and the unicast mode; and the OBU is configured to transmit services to another OBU in at least one of following modes: the broadcast mode and the unicast mode.

2. The V2X architecture as claimed in claim 1, wherein
the interface between the V2X AS and the BM-SC is an interface for a user plane and a control plane;
the interface between the V2X AS and the P-GW is a user plane interface;
an interface between the V2X AS and the V2X-Function is a control plane interface;
an interface between the V2X-function entity and a home subscriber server, HSS, is a control plane interface;
an interface between the V2X-functions is a control plane interface; and
an interface between the OBUs is an interface for a user plane and a control plane, and an interface between the OBU and the RSU is an interface for a user plane and a control plane, an interface between the OBU and the V2X-Function is a control plane interface, and a structure between the OBU and the V2X AS is an application layer interface.

3. The V2X architecture as claimed in claim 1, wherein
the V2X AS is further configured to select to send the V2X service to the OBU via a dedicated short range communication DSRC RSU;
the V2X function entity comprises a home V2X function entity and a visited V2X function entity that support roaming functions, and an interface is between the home V2X function and the visited V2X function; the V2X function entity is a network logic entity; and
the RSU is an evolved NodeB, eNB, supporting V2X services or a user equipment, UE, in a stationary state.

4. A service implementation method in a Vehicle to Everything, V2X, architecture, wherein the V2X architecture at least comprises: an on-board unit, a road side unit, a V2X function entity and a V2X application server, comprising:
sending, by the on-board unit, request information to the V2X application server via a network application layer signaling or the V2X function entity, wherein the request information is used to indicate requesting for a V2X service;
receiving, by the on-board unit, from the V2X application server first indication information in response to the request information, wherein the first indication information is used to indicate whether the request information successfully requests for the V2X service; and
receiving, by the on-board unit when the first indication information indicates that the request information successfully requests for the V2X service, data of the V2X service sent by the V2X application server via the road side unit.

5. The method as claimed in claim 4, wherein the sending, by the on-board unit, the request information to the V2X application server via the network application layer signaling or the V2X function entity comprises:
sending, by the road side unit when the road side unit stores second indication information, the request information to the V2X server via the V2X function entity according to the second indication information, wherein the second indication information is used to indicate that the request information is sent via the V2X function entity in a situation of meeting a preset condition; and
sending, by the on-board unit when there is no second indication information in the on-board unit, the request information to the V2X application server via the network application layer signaling.

6. The method as claimed in claim 4, wherein the sending, by the on-board unit, the request information to the V2X application server via the network application layer signaling or the V2X function entity comprises:
judging, by the on-board unit, whether the request message needs to be sent to the V2X application server via the V2X function entity;
sending, by the on-board unit when a judgment result is yes, the request information to the V2X application server via the V2X function entity; and
sending, by the on-board unit when the judgment result is no, the request information to the V2X application server via the network application layer signaling.

7. The method as claimed in claim 4, wherein the sending, by the on-board unit, the request information to the V2X application server via the network application layer signaling or the V2X function entity comprises:
sending, by the on-board unit when the on-board unit receives third indication information from a network-side device, the request information to the V2X application server via the network application layer signaling according to the third indication information, wherein the third indication information is used to instruct the on-board unit to send the request information to the V2X application server via the V2X function entity; and
sending, by the on-board unit when the on-board unit does not receive the third indication information sent from the network-side device, the request information to the V2X application server via the network application layer signaling.

8. The method as claimed in claim 4, wherein the V2X application server is configured to provide the V2X service, wherein the V2X service comprises traffic indication information or application information data.

9. The method as claimed in claim 8, wherein the V2X function entity is configured to provide parameter information of the V2X service, wherein the parameter information comprises at least one of: authentication information, authorization information, charging information, safety information, identity mapping information, and identity storage information.

10. The method as claimed in any one of claims 4 to 9, wherein the road side unit is at least one of an evolved NodeB or an on-board unit, and the on-board unit is a user equipment supporting V2X services.

11. The method as claimed in claim 4, wherein the V2X application server sends the data of the V2X service through one of the following modes: a unicast mode and a broadcast mode.

12. A service implementation method in a Vehicle to Everything, V2X, architecture, wherein the V2X architecture at least comprises: an on-board unit, a road side unit, a V2X function entity, and a V2X application server, comprising:
receiving, by the V2X application server, request information sent by the on-board unit via one of a network application layer signaling and the V2X function entity, wherein the request information is used to indicate requesting for a V2X service;
sending, by the V2X application server, to the on-board unit first indication information in response to the request information, wherein the first indication information is used to indicate whether the request information successfully requests for the V2X service; and
sending, by the V2X application server when the first indication information indicates that the request information successfully requests for the V2X service, data of the V2X service to the on-board unit via the road side unit.

13. The method as claimed in claim 12, wherein the receiving, by the V2X application server, request information sent by the on-board unit via one of a network application layer signaling and the V2X function entity comprises:
receiving, by the V2X server when the road side unit stores second indication information, the request information that is sent by the road side unit via the V2X function entity according to the second indication information, wherein the second indication information is used to indicate that the request information is sent via the V2X function entity in a situation of meeting a preset condition; and
receiving, by the V2X application server when there is no second indication information in the on-board unit, the request information that is sent by the on-board unit via the network application layer signaling.

14. The method as claimed in claim 12, wherein the receiving, by the V2X application server, request information sent by the on-board unit via one of a network application layer signaling and the V2X function entity comprises:
receiving, by the V2X application server when the on-board unit judges that the request message needs to be sent to the V2X application server via the V2X function entity, the request information that is sent by the on-board unit via the V2X function entity; and
receiving, by the V2X application server when the on-board unit judges that the request message does not need to be sent to the V2X application server via the V2X function entity, the request information that is sent by the on-board unit via the network application layer signaling.

15. The method as claimed in claim 12, wherein the receiving, by the V2X application server, request information sent by the on-board unit via a network application layer signaling or the V2X function entity comprises:
receiving, by the V2X application server when the on-board unit receives third indication information from a network-side device, the request information that is sent by the on-board unit via the network application layer signaling according to the third indication information, wherein the third indication information is used to instruct the on-board unit to send the request information to the V2X application server via the V2X function entity; and
receiving, by the V2X application server when the on-board unit does not receive the third indication information sent from the network-side device, the request information that is sent by the on-board unit via the network application layer signaling.

16. The method as claimed in claim 12, wherein the V2X application server is configured to provide the V2X service, wherein the V2X service comprises traffic indication information or application information data.

17. The method as claimed in claim 16, wherein the V2X function entity is configured to provide parameter information of the V2X service, wherein the parameter information comprises at least one of: authentication information, authorization information, charging information, safety information, identity mapping information, and identity storage information.

18. The method as claimed in any one of claims 12 to 17, wherein the road side unit is at least one of an evolved NodeB and an on-board unit, and the on-board unit is a user equipment supporting V2X services.

19. The method as claimed in claim 12, wherein the V2X application server sends the data of the V2X service through one of: a unicast mode and a broadcast mode.

20. A service implementation apparatus in a Vehicle to Everything, V2X, architecture, configured on a side of an on-board unit, and comprising a first sending module, a first receiving module and a second sending module, wherein the V2X architecture comprises the on-board unit, a road side unit, a V2X function entity and a V2X application server, wherein
the first sending module is configured to send request information to the V2X application server via one of a network application layer signaling and the V2X function entity, wherein the request information is used to indicate requesting for a V2X service;
the first receiving module is configured to receive from the V2X application server first indication information in response to the request information, wherein the first indication information is used to indicate whether the request information successfully requests for the V2X service; and
the second sending module is configured to receive, when the first indication information indicates that the request information successfully requests for the V2X service, data of the V2X service sent by the V2X application server via the road side unit.

21. The apparatus as claimed in claim 20, wherein the first sending module comprises:
a first sending unit, configured to send, when the on-board unit stores second indication information, the request information to the V2X server via the V2X function entity according to the second indication information, wherein the second indication information is used to indicate that the request information is sent via the V2X function entity in a situation of meeting a preset condition; and
a second sending unit, configured to send, when there is no second indication information in the on-board unit, the request information to the V2X application server via the network application layer signaling.

22. The apparatus as claimed in claim 20, wherein the first sending module comprises:
a judgment unit, configured to judge whether the request message needs to be sent to the V2X application server via the V2X function entity;
a third sending unit, configured to send the request information to the V2X application server via the V2X function entity when a judgment result is yes; and
a fourth sending unit, configured to send the request information to the V2X application server via the network application layer signaling when the judgment result is no.

23. The apparatus as claimed in claim 20, wherein the first sending module comprises:
a fifth sending unit, configured to send, when the on-board unit receives third indication information from a network-side device, the request information to the V2X application server via the network application layer signaling according to the third indication information, wherein the third indication information is used to instruct the on-board unit to send the request information to the V2X application server via the V2X function entity; and
a sixth sending unit, configured to send, when the on-board unit does not receive the third indication information sent from the network-side device, the request information to the V2X application server via the network application layer signaling.

24. A service implementation apparatus in a Vehicle to Everything, V2X, architecture, configured on a side of a V2X application server, and comprising a second receiving module, a third sending module and a fourth sending module, wherein the V2X architecture comprises an on-board unit, a road side unit, a V2X function entity and a V2X application server, wherein
the second receiving module is configured to receive request information sent by the on-board unit via one of a network application layer signaling and the V2X function entity, wherein the request information is used to indicate requesting for a V2X service;
the third sending module is configured to send to the on-board unit first indication information in response to the request information, wherein the first indication information is used to indicate whether the request information successfully requests for the V2X service; and
the fourth sending module is configured to send data of the V2X service to the on-board unit via the road side unit when the first indication information indicates that the request information successfully requests for the V2X service.

25. The apparatus as claimed in claim 24, wherein the second receiving module comprises:
a first receiving unit, configured to receive, when the road side unit stores second indication information, the request information that is sent by the road side unit via the V2X function entity according to the second indication information, wherein the second indication information is used to indicate that the request information is sent via the V2X function entity in a situation of meeting a preset condition; and
a second receiving unit, configured to receive, when there is no second indication information in the road side unit, the request information that is sent by the road side unit via the network application layer signaling.

26. The apparatus as claimed in claim 24, wherein the second receiving module comprises:
a third receiving unit, configured to receive, when the on-board unit judges that the request message needs to be sent via the V2X function entity to the V2X application server, the request information that is sent by the on-board unit via the V2X function entity; and
a fourth receiving unit, configured to receive, when the on-board unit judges that the request message does not need to be sent via the V2X function entity to the V2X application server, the request information that is sent by the on-board unit via the network application layer signaling.

27. The apparatus as claimed in claim 24, wherein the second receiving module comprises:
a fifth receiving unit, configured to receive, when the on-board unit receives third indication information from a network-side device, the request information that is sent by the on-board unit via the network application layer signaling according to the third indication information, wherein the third indication information is used to instruct the on-board unit to send the request information to the V2X application server via the V2X function entity; and
a sixth receiving unit, configured to receive, when the on-board unit does not receive the third indication information sent from the network-side device, the request information that is sent by the on-board unit via the network application layer signaling.
